# EUROPEAN PATENT APPLICATION

(11) **EP 3 065 194 A1**
(43) Date of publication of application: **07.09.2016**
(21) Application number: 16155610.5
(22) Date of filing: 15.02.2016
(51) Int. Cl.: H01M 2/02, H01M 2/10

(54) **COVERING MATERIAL-PROVIDED NON-AQUEOUS SECONDARY CELL, PRODUCING METHOD THEREOF, AND CELL STACK**

(30) Priority: 05.03.2015 JP 2015043814
(71) Applicant: NITTO DENKO CORPORATION, Ibaraki-shi, Osaka 567-8680 (JP)
(72) Inventor: KAWABE, Shigeki, Ibaraki-shi, Osaka 567-8680 (JP); SHIMOKAWA, Daisuke, Ibaraki-shi, Osaka 567-8680 (JP)
(74) Representative: Grünecker Patent- und Rechtsanwälte PartG mbB

(57) **Abstract**

A covering material-provided non-aqueous secondary cell includes a non-aqueous secondary cell including a cell main body having one surface, the other surface disposed in opposed relation at spaced intervals to the one surface, and circumferential side surfaces connecting a circumferential end edge of the one surface to a circumferential end edge of the other surface and a terminal provided on at least any one of the one surface and the other surface and a covering material covering the cell main body so as to expose the terminal. The covering material includes a substrate and a pressure-sensitive adhesive layer disposed on one surface of the substrate and by allowing the pressure-sensitive adhesive layer to pressure-sensitively adhere to at least a part of the circumferential end edge of at least any one of the one surface and the other surface of the cell main body, the covering material covers at least a part of the circumferential end edge of at least any one of the one surface and the other surface of the cell main body.

## Description

### BACKGROUND OF THE INVENTION

### Field of the Invention

The present invention relates to a covering material-provided non-aqueous secondary cell, a producing method thereof, and a cell stack, to be specific, to a method for producing a covering material-provided non-aqueous secondary cell, a covering material-provided non-aqueous secondary cell obtained by the producing method, and a cell stack including the covering material-provided non-aqueous secondary cell.

### Description of Related Art

It has been conventionally known that a non-aqueous secondary cell such as a lithium ion secondary cell is covered with a cover sheet or the like.

It has been, for example, proposed that in a prismatic cell including a prismatic outer can having an opening at the top thereof and a sealing body for sealing the opening, the bottom and side surfaces of the prismatic outer can are covered with a piece of folded insulation sheet (ref: for example, Japanese Unexamined Patent Publication No. 2011-181485).

### SUMMARY OF THE INVENTION

However, in the prismatic cell described in Japanese Unexamined Patent Publication No. 2011-181485, there is a disadvantage that the upper surfaces of the prismatic outer can and the sealing body are exposed, so that, when used under a high humidity atmosphere, a drop of water adheres to the above-described upper surfaces and infiltrates from a gap between the prismatic outer can and the sealing body into the inside and thus, the prismatic cell deteriorates.

It is an object of the present invention to provide a covering material-provided non-aqueous secondary cell having excellent reliability, a producing method thereof, and a cell stack.

The present invention [1] includes a covering material-provided non-aqueous secondary cell including a non-aqueous secondary cell including a cell main body having one surface, the other surface disposed in opposed relation at spaced intervals to the one surface, and circumferential side surfaces connecting a circumferential end edge of the one surface to a circumferential end edge of the other surface and a terminal provided on at least any one of the one surface and the other surface and a covering material covering the cell main body so as to expose the terminal, wherein the covering material includes a substrate and a pressure-sensitive adhesive layer disposed on one surface of the substrate and by allowing the pressure-sensitive adhesive layer to pressure-sensitively adhere to at least a part of the circumferential end edge of at least any one of the one surface and the other surface of the cell main body, the covering material covers at least a part of the circumferential end edge of at least any one of the one surface and the other surface of the cell main body.

According to the covering material-provided non-aqueous secondary cell, by allowing the pressure-sensitive adhesive layer to pressure-sensitively adhere to at least a part of the circumferential end edge of at least any one of the one surface and the other surface of the cell main body, the substrate covers at least a part of the circumferential end edge of at least any one of the one surface and the other surface of the cell main body, so that infiltration of water from at least the part of the circumferential end edge of at least any one of the one surface and the other surface of the cell main body into the inside of the cell main body can be suppressed. Thus, deterioration of the non-aqueous secondary cell can be suppressed. As a result, the covering material-provided non-aqueous secondary cell has excellent reliability.

The present invention [2] includes the covering material-provided non-aqueous secondary cell described in [I], wherein the covering material covers 60% or more of at least any one of the one surface and the other surface.

According to the covering material-provided non-aqueous secondary cell, infiltration of water from at least any one of the one surface and the other surface into the inside of the cell main body can be effectively suppressed.

The present invention [3] includes the covering material-provided non-aqueous secondary cell described in [1] or [2], wherein the terminal is provided on the one surface of the cell main body; each of the one surface and the other surface of the cell main body has a generally rectangular shape having two long sides facing each other and two short sides facing each other between the two long sides; the circumferential side surfaces have two first surfaces continuous to the two long sides and disposed in opposed relation at spaced intervals to each other and two second surfaces continuous to the two short sides and disposed in opposed relation at spaced intervals to each other; and by allowing the pressure-sensitive adhesive layer to pressure-sensitively adhere to the other surface and the two first surfaces of the cell main body, the covering material covers the other surface and the two first surfaces of the cell main body and has overlapped portions having the covering material overlapped with each other at the outer sides of the two second surfaces of the cell main body.

In the covering material-provided non-aqueous secondary cell, the overlapped portions are provided not at the outer sides of the first surfaces, but at the outer sides of the second surfaces, so that bulkiness thereof in a direction in which the first surfaces are adjacent to each other can be suppressed. Thus, when a cell stack is produced by stacking a plurality of covering material-provided non-aqueous secondary cells so that the first surfaces are adjacent to each other, the compact cell stack can be produced.

The present invention [4] includes the covering material-provided non-aqueous secondary cell described in any one of [1] to [3], wherein the covering material has a generally rectangular shape in a developed state.

According to the covering material-provided non-aqueous secondary cell, the covering material has a generally rectangular shape in the developed state, so that the covering material in a simple shape can cover the non-aqueous secondary cell without performing trimming such as a cut or a cutout to the covering material.

The present invention [5] includes the covering material-provided non-aqueous secondary cell described in any one of [1] to [4], wherein the pressure-sensitive adhesive layer is disposed on the entire one surface of the substrate.

According to the covering material-provided non-aqueous secondary cell, the pressure-sensitive adhesive layer is disposed on the entire one surface of the substrate, so that the pressure-sensitive adhesive layer is easily formed without being formed in a pattern and thus, an easy structure of the covering material can be achieved. Also, the non-aqueous secondary cell can be covered without any space.

The present invention [6] includes a method for producing a covering material-provided non-aqueous secondary cell including a cell preparing step of preparing a non-aqueous secondary cell including a cell main body having one surface, the other surface disposed in opposed relation at spaced intervals to the one surface, and circumferential side surfaces connecting a circumferential end edge of the one surface to a circumferential end edge of the other surface and a terminal provided on at least any one of the one surface and the other surface; a covering material preparing step of preparing a covering material including a substrate and a pressure-sensitive adhesive layer disposed on one surface of the substrate; and a covering step of covering the cell main body with the covering material so as to expose the terminal, wherein in the covering step, by allowing the pressure-sensitive adhesive layer to pressure-sensitively adhere to at least a part of the circumferential end edge of at least any one of the one surface and the other surface of the cell main body, the covering material covers at least a part of the circumferential end edge of at least any one of the one surface and the other surface of the cell main body.

According to the method for producing a covering material-provided non-aqueous secondary cell, in the covering step, the pressure-sensitive adhesive layer pressure-sensitively adheres to at least a part of the circumferential end edge of at least any one of the one surface and the other surface of the cell main body, so that infiltration of water from at least a part of the circumferential end edge of at least any one of the one surface and the other surface of the cell main body into the inside of the cell main body can be suppressed. Thus, deterioration of the non-aqueous secondary cell can be suppressed. As a result, the covering material-provided non-aqueous secondary cell having excellent reliability can be produced.

The present invention [7] includes the method for producing a covering material-provided non-aqueous secondary cell described in [6], wherein the terminal is provided on the one surface of the cell main body; each of the one surface and the other surface of the cell main body has a generally rectangular shape having two long sides facing each other and two short sides facing each other between the two long sides; the circumferential side surfaces have two first surfaces continuous to the two long sides and disposed in opposed relation at spaced intervals to each other and two second surfaces continuous to the two short sides and disposed in opposed relation at spaced intervals to each other; and the covering step includes a first step of covering the other surface and the two first surfaces of the cell main body with the covering material by allowing the pressure-sensitive adhesive layer to pressure-sensitively adhere to the other surface and the two first surfaces of the cell main body and a second step of forming overlapped portions having the covering material overlapped with each other at the outer sides of the two second surfaces of the cell main body.

According to the method for producing a covering material-provided non-aqueous secondary cell, in the first step, the covering material covers the other surface and the two first surfaces of the cell main body and in the second step, the overlapped portions in which the covering material is overlapped with each other are formed at the outer sides of the two second surfaces of the cell main body, so that the overlapped portions can be surely disposed not at the outer sides of the first surfaces, but at the outer sides of the second surfaces.

The present invention [8] includes a cell stack including a plurality of covering material-provided non-aqueous secondary cells described in [3], wherein the plurality of covering material-provided non-aqueous secondary cells are stacked so that the first surfaces are adjacent to each other.

In the cell stack, the overlapped portions are provided not at the outer sides of the first surfaces, but at the outer sides of the second surfaces, so that bulkiness thereof in a direction in which the first surfaces are adjacent to each other can be suppressed and miniaturization thereof can be achieved.

### BRIEF DESCRIPTION OF THE DRAWINGS

FIG. 1 shows a perspective view of one embodiment of a covering material-provided non-aqueous secondary cell of the present invention.
FIG. 2 shows a front view of the covering material-provided non-aqueous secondary cell shown in FIG. 1.
FIG. 3 shows a side sectional view of the covering material-provided non-aqueous secondary cell shown in FIG. 2 and a sectional view along an A-A line in FIG. 2.
FIG. 4 shows a side sectional view of the covering material-provided non-aqueous secondary cell shown in FIG 2 and a sectional view along a B-B line in FIG 2.
FIG 5 shows a plane sectional view of the covering material-provided non-aqueous secondary cell shown in FIGS. 3 and 4 and a sectional view along a C-C line in FIGS. 3 and 4.
FIG. 6 shows process drawings in a method for producing the covering material-provided non-aqueous secondary cell shown in FIG. 1:
FIG 6A illustrating a cell preparing step and a covering material preparing step,
FIG 6B illustrating a step of disposing a non-aqueous secondary cell on a pressure-sensitive adhesive layer,
FIG 6C illustrating a step of bringing the pressure-sensitive adhesive layer into contact with a front surface and a rear surface of the non-aqueous secondary cell,
FIG 6D illustrating a step of forming a first overlapped portion by allowing the pressure-sensitive adhesive layer to pressure-sensitively adhere to an upper surface of the non-aqueous secondary cell, and
FIG. 6E illustrating a step of forming second overlapped portions by allowing the pressure-sensitive adhesive layer to pressure-sensitively adhere to a right surface and a left surface of the non-aqueous secondary cell.
FIG. 7 shows a perspective view of a cell stack including the plurality of covering material-provided non-aqueous secondary cells shown in FIG. 1.
FIG. 8 shows a perspective view for illustrating a modified example (embodiment in which a non-aqueous secondary cell is cylindrical) of a covering material-provided non-aqueous secondary cell as seen from above.
FIG. 9 shows a perspective view for illustrating a modified example (embodiment in which a non-aqueous secondary cell is cylindrical) of a covering material-provided non-aqueous secondary cell as seen from below.
FIGS. 10A to 10B show process drawings in a method for producing a covering material-provided non-aqueous secondary cell using a modified example (embodiment in which a pressure-sensitive adhesive layer is provided at the central portion in a right-left direction of a surface of a substrate and second overlapped portions are formed by the substrate with each other) of a covering material:

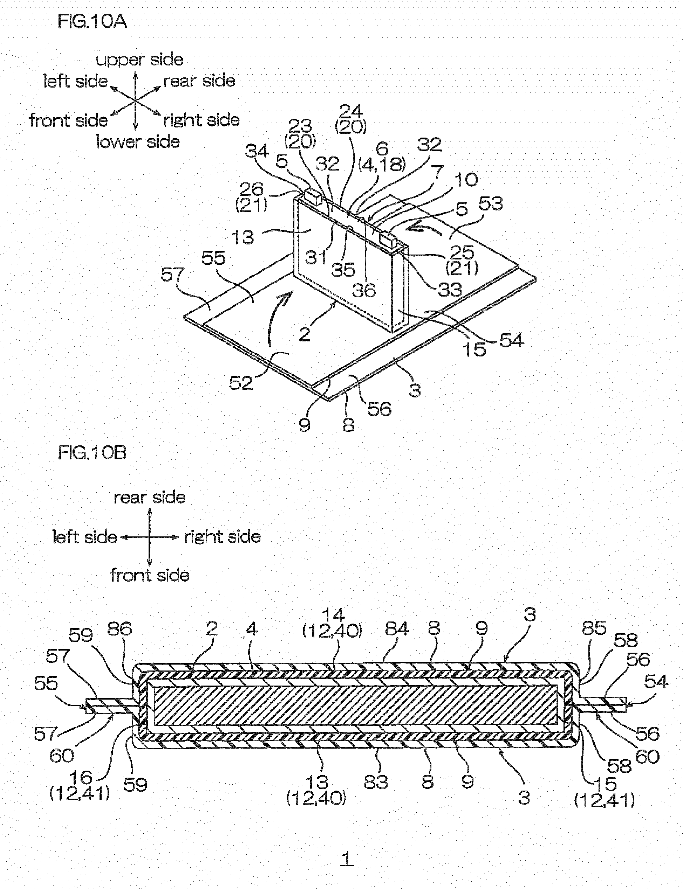

FIG 10A illustrating a perspective view of a step of disposing a non-aqueous secondary cell on the pressure-sensitive adhesive layer and

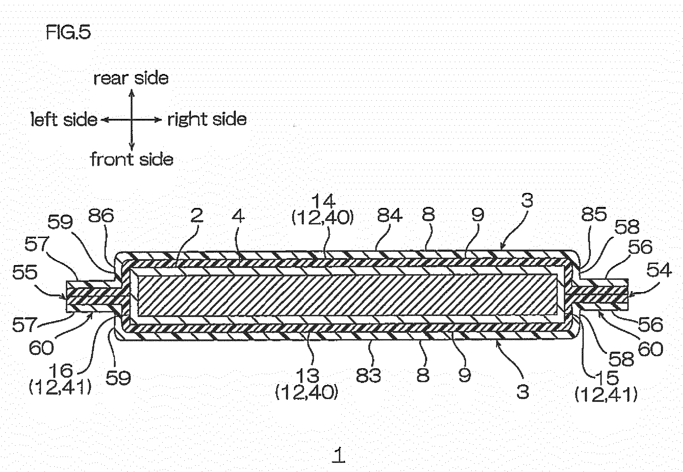

FIG. 10B illustrating a plane sectional view (plane sectional view corresponding to FIG. 5) in a second step.

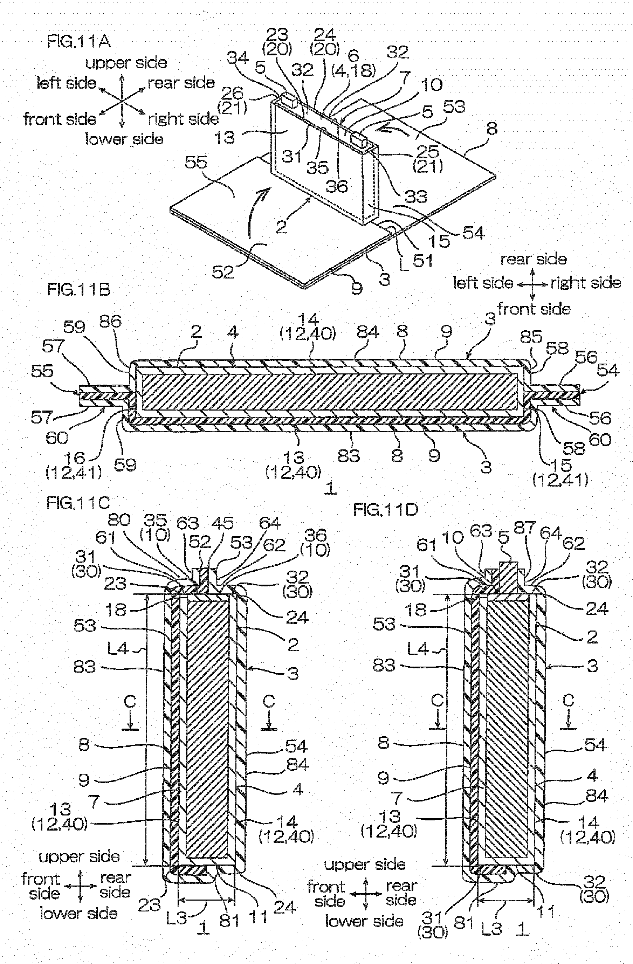

FIGS. 11A to 11D show process drawings in a method for producing a covering material-provided non-aqueous secondary cell using a modified example (embodiment in which a pressure-sensitive adhesive layer is provided at a front-side portion of a substrate and second overlapped portions are formed by the substrate and the pressure-sensitive adhesive layer) of a covering material:
FIG 11A illustrating a perspective view of a step of disposing a non-aqueous secondary cell on the central portion of the covering material,
FIG 11B illustrating a plane sectional view (plane sectional view corresponding to FIG. 5) in a second step,

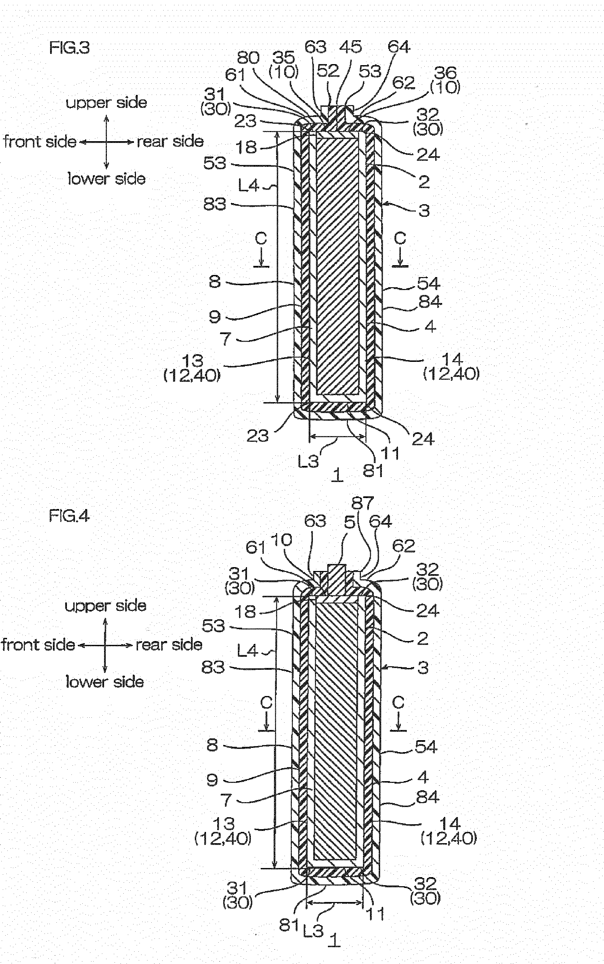

FIG. 11C illustrating a side sectional view (side sectional view corresponding to FIG. 3) in the second step, and
FIG. 11D illustrating a side sectional view (side sectional view corresponding to FIG 4) in the second step.

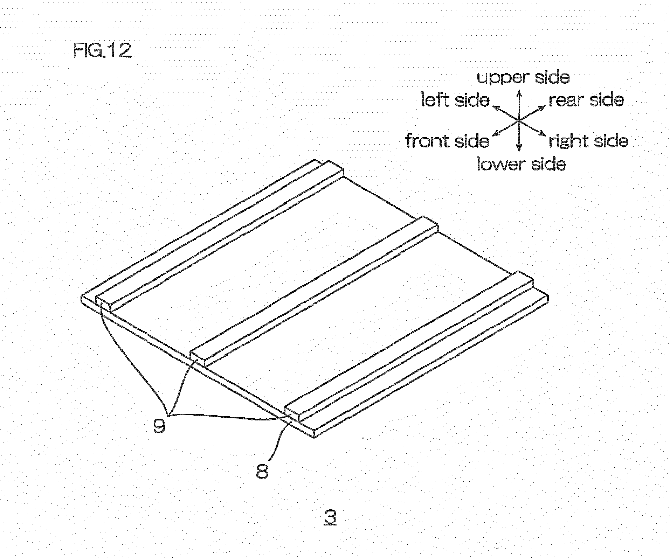

FIG. 12 shows a perspective view of a modified example (embodiment in which pressure-sensitive adhesive layers are provided in a striped state on a surface of a substrate) of a covering material.

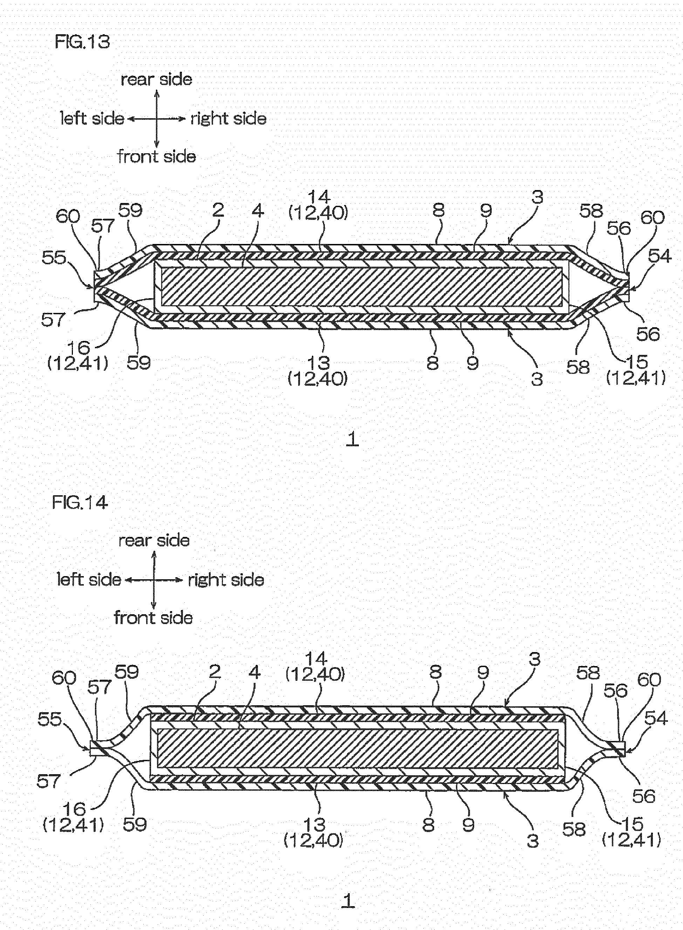

FIG. 13 shows a plane sectional view of a modified example of a covering material-provided non-aqueous secondary cell and a plane sectional view corresponding to FIG. 5.
FIG. 14 shows a plane sectional view of a modified example (embodiment in which second overlapped portions are formed by the substrate with each other) of a covering material-provided non-aqueous secondary cell and a plane sectional view corresponding to FIG. 5.

### DETAILED DESCRIPTION OF THE INVENTION

### <One Embodiment>

One embodiment of a covering material-provided non-aqueous secondary cell, a producing method thereof, and a cell stack of the present invention is sequentially described as follows.

### 1. Covering Material-Provided Non-Aqueous Secondary Cell

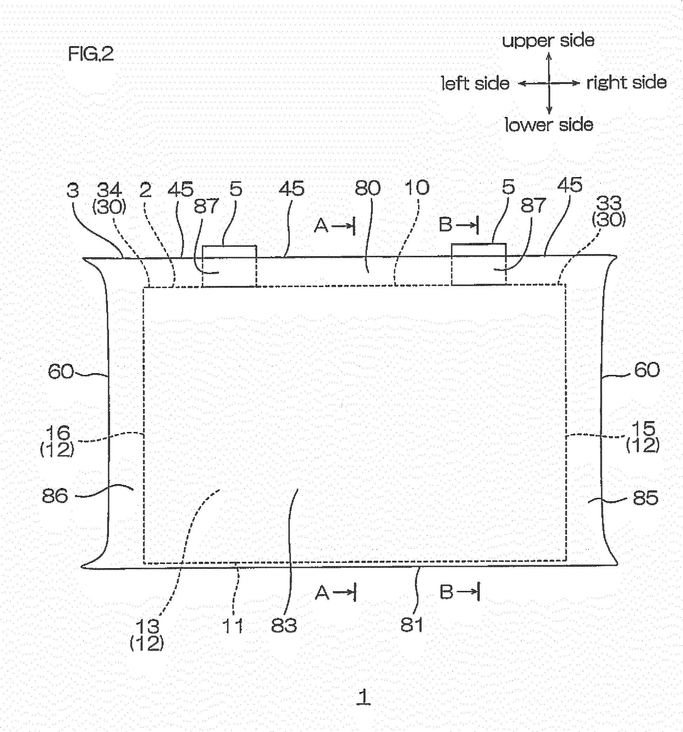

In FIG. 2, the up-down direction of the paper surface is referred to as an up-down direction (first direction), the upper side of the paper surface is referred to as an upper side (one side in the first direction), and the lower side of the paper surface is referred to as a lower side (the other side in the first direction). The right-left direction of the paper surface is referred to as a right-left direction (second direction orthogonal to the first direction), the left side of the paper surface is referred to as a left side (one side in the second direction), and the right side of the paper surface is referred to as a right side (the other side in the second direction). The paper thickness direction is referred to as a front-rear direction (third direction orthogonal to the first and second directions), the near side of the paper surface is referred to as a front side (one side in the third direction), and the far side of the paper surface is referred to as a rear side (the other side in the third direction). To be specific, directions are in accordance with direction arrows in each view.

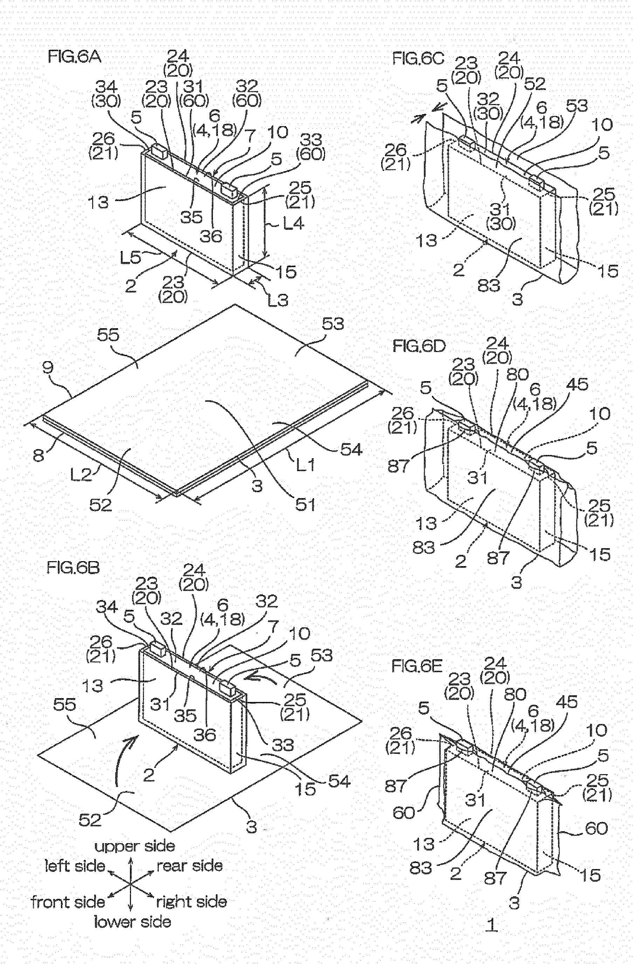

In FIG. 6A, in a covering material 3, a substrate 8 and a pressure-sensitive adhesive layer 9 (described later) are shown. In FIGS. 6B to 6E, the substrate 8 and the pressure-sensitive adhesive layer 9 are omitted in order to clearly show the relationship between the covering material 3 and a non-aqueous secondary cell 2 (described later).

In FIGS. 6A and 6B, an exterior portion 7 (described later) is shown. In FIGS. 6C to 6E, the exterior portion 7 is omitted in order to clearly show the relationship between the covering material 3 and the non-aqueous secondary cell 2 (described later).

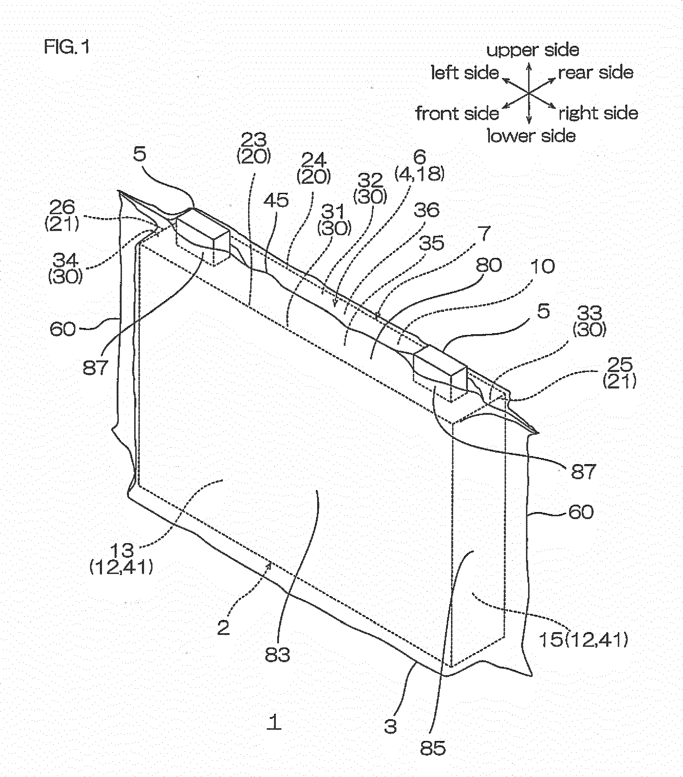

As shown in FIG. 1, a covering material-provided non-aqueous secondary cell 1 includes the non-aqueous secondary cell 2 (dashed lines) and the covering material 3.

### 1-1. Non-Aqueous Secondary Cell

As shown in FIGS. 6A and 6B, the non-aqueous secondary cell 2 is, for example, a prismatic non-aqueous secondary cell having a generally box shape. Examples of the non-aqueous secondary cell 2 include a lithium ion secondary cell and a lithium metal secondary cell. Preferably, a lithium ion secondary cell is used.

The non-aqueous secondary cell 2 includes a cell main body 4 and terminals 5.

The cell main body 4 has a generally box shape that is long in the right-left direction. The cell main body 4 includes a charging/discharging portion 6, the exterior portion 7 that has an opening portion at the top thereof and houses the charging/discharging portion 6 therein, and an upper lid 18 (ref: FIGS. 3 and 4) that covers the opening portion in the exterior portion 7.

The charging/discharging portion 6 has a generally box shape and includes a known positive electrode, negative electrode, and non-aqueous electrolytic solution.

The exterior portion 7 is an exterior case having a generally bottomed rectangular cylindrical shape. The exterior portion 7 houses the charging/discharging portion 6 at the inner side thereof.

As shown in FIGS. 3 and 4, the upper lid 18 is disposed in the opening portion in the exterior portion 7 so as to cover the upper surface of the charging/discharging portion 6.

As shown in FIGS. 2, 4, and 5, the cell main body 4 has an upper surface 10 as one example of one surface, a lower surface 11 as one example of the other surface, and circumferential side surfaces 12. The upper surface 10 is the upper surface of the upper lid 18, the lower surface 11 is the lower surface of the exterior portion 7, and the circumferential side surfaces 12 are the outer circumferential side surfaces of the exterior portion 7.

As shown by the dashed lines in FIG. 1, the upper surface 10 has a rectangular shape having two long sides 20 that face each other and two short sides 21 that face each other between the two long sides 20.

The two long sides 20 have a front long side 23 and a rear long side 24 that faces the rear side of the front long side 23 at spaced intervals thereto.

The two short sides 21 have a right short side 25 and a left short side 26 that faces the left side of the right short side 25 at spaced intervals thereto.

The upper surface 10 has circumferential end edges 30. The circumferential end edges 30 have a front end edge 31 that includes the front long side 23, a rear end edge 32 that is disposed in opposed relation at spaced intervals to the rear side of the front end edge 31 and includes the rear long side 24, a right end edge 33 that is continuous to the right end of the front end edge 31 and that of the rear end edge 32 and includes the right short side 25, and a left end edge 34 that is continuous to the left end of the front end edge 31 and that of the rear end edge 32 and includes the left short side 26.

Furthermore, the upper surface 10 has a front portion 35 that is positioned at the front-side half portion of the upper surface 10 and includes the front end edge 31 and a rear portion 36 that is positioned at the rear-side half portion of the upper surface 10 and includes the rear end edge 32.

The lower surface 11 is disposed in opposed relation at spaced intervals to the lower side of the upper surface 10. As shown in FIG. 4, the lower surface 11 has the same outer shape as the above-described upper surface 10.

The circumferential side surfaces 12 connect the circumferential end edge 30 of the upper surface 10 to the circumferential end edge 30 of the lower surface 11. To be specific, as shown in FIGS. 1 and 5, the circumferential side surfaces 12 have first surfaces 40 that are continuous to the front long side 23 and the rear long side 24 and second surfaces 41 that are continuous to the right short side 25 and the left short side 26 (ref: FIG. 5).

The two first surfaces 40 are disposed in opposed relation at spaced intervals to each other and consist of a front surface 13 and a rear surface 14 that is disposed at the rear side of the front surface 13. The front surface 13 is continuous to the front end edge 31. The rear surface 14 is continuous to the rear end edge 32.

As shown in FIG. 5, the two second surfaces 41 are disposed in opposed relation at spaced intervals to each other and consist of a right surface 15 and a left surface 16 that is disposed at the left side of the right surface 15. The right surface 15 is continuous to the right end edge 33. The left surface 16 is continuous to the left end edge 34 (ref: FIG. 1).

As shown in FIG. 1, the terminals 5 are provided on the upper surface 10 of the cell main body 4. To be specific, as shown in FIG. 6A, the terminals 5 have generally box shapes protruding from the upper surface 10 upwardly at the central portion in the front-rear direction of the upper surface 10 of the cell main body 4. Two pieces of terminals 5 are provided at spaced intervals to each other in the right-left direction. Of the two pieces of terminals 5, one terminal 5 is a positive electrode terminal that is electrically connected to a positive electrode of the charging/discharging portion 6 and the other terminal 5 is a negative electrode terminal that is electrically connected to a negative electrode of the charging/discharging portion 6.

### 1-2. Covering Material

The covering material 3 covers the cell main body 4 so as to expose the terminals 5.

As shown in FIGS. 3 to 5, the covering material 3 integrally includes an upper surface-covering portion 80 that covers the upper surface 10 of the non-aqueous secondary cell 2, a lower surface-covering portion 81 that covers the lower surface 11, a front surface-covering portion 83 that covers the front surface 13, a rear surface-covering portion 84 that covers the rear surface 14, a right surface-covering portion 85 that covers the right surface 15, and a left surface-covering portion 86 that covers the left surface 16.

The covering material 3 includes a first overlapped portion 45 that is formed on the upper side of the upper surface 10, terminal covering portions 87 that cover the lower portions of the terminals 5, and second overlapped portions 60 that are formed at the outer sides of the right surface 15 and the left surface 16.

As shown in FIG. 3, the first overlapped portion 45 has a shape that is continuous to the upper surface-covering portion 80 and extends from the central portion in the front-rear direction of the upper surface-covering portion 80 upwardly. The first overlapped portion 45 is formed by overlapping the upper-side both end edges (a most front portion 63 and a most rear portion 64 described later) of the covering material 3. The first overlapped portion 45 and the upper surface-covering portion 80 integrally have a generally T-shape in side sectional view.

As shown in FIG. 4, the terminal covering portions 87 are continuous to the upper surface-covering portion 80 and cover the lower portions of the terminals 5. Meanwhile, the terminal covering portions 87 expose the upper portions of the terminals 5. As shown in FIGS. 1 and 2, the terminal covering portions 87 are disposed in parallel with the first overlapped portion 45 in the right-left direction.

As shown in FIG 5, each of the two second overlapped portions 60 is provided so as to be continuous to each of the right surface-covering portion 85 and the left surface-covering portion 86. The two second overlapped portions 60 have a shape that extends from the central portion in the front-rear direction of the right surface-covering portion 85 toward the right side and a shape that extends from the central portion in the front-rear direction of the left surface-covering portion 86 toward the left side. The second overlapped portions 60 are formed by overlapping the right-side both end edges (most right portions 56 described later) of the covering material 3 and by overlapping the left-side both end edges (most left portions 57 described later) of the covering material 3. The right-side second overlapped portion 60 and the right surface-covering portion 85 integrally have a generally T-shape in plane sectional view. The left-side second overlapped portion 60 and the left surface-covering portion 86 integrally have a generally T-shape in plane sectional view.

As shown in FIG. 6A, the covering material 3 has a rectangular shape in a developed state. The covering material 3 includes the substrate 8 and the pressure-sensitive adhesive layer 9.

An example of the substrate 8 includes a sheet formed from known flexible plastic such as polyethylene terephthalate, polyacrylate, and polyolefin. The substrate 8 may have a single layer form or a multilayer form. The substrate 8 has a thickness of, for example, 5 µm or more, or preferably 10 µm or more, and, for example, 100 µm or less, or preferably 60 µm or less.

As shown in FIG 6A, the pressure-sensitive adhesive layer 9 is disposed on the entire surface (one example of one surface in a thickness direction) of the substrate 8. The pressure-sensitive adhesive layer 9 has a sheet shape formed from a pressure-sensitive adhesive. An example of the pressure-sensitive adhesive includes a known pressure-sensitive adhesive having encapsulating properties (sealability) such as an acrylic pressure-sensitive adhesive, a rubber pressure-sensitive adhesive, a silicone pressure-sensitive adhesive, and a polyolefin pressure-sensitive adhesive. The pressure-sensitive adhesive layer 9 has a thickness of, for example, 1 µm or more, or preferably 5 µm or more, and, for example, 100 µm or less, or preferably 50 µm or less.

The covering material 3 can be obtained by disposing the pressure-sensitive adhesive layer 9 on the surface (upper surface) of the substrate 8 by a known method. Also, though not shown, the covering material 3 can be produced as follows: the pressure-sensitive adhesive layer 9 is disposed on one piece of rectangular substrate 8 and this operation is repeatedly performed to be produced per one piece of covering material 3 (single sheet method). Or, the pressure-sensitive adhesive layer 9 is continuously disposed, while the substrate 8 that is wound around a roll is continuously delivered and thereafter, the resulting layer is cut into a rectangular shape, so that one piece of covering material 3 can be also produced.

The size of the covering material 3 is appropriately adjusted so as to be capable of forming the above-described covering portions (the upper surface-covering portion 80, the lower surface-covering portion 81, the front surface-covering portion 83, the rear surface-covering portion 84, the right surface-covering portion 85, the left surface-covering portion 86, and the terminal covering portions 87) and the overlapped portions (the first overlapped portion 45 and the second overlapped portions 60).

To be specific, as referred to FIGS. 3, 4, and 6A, a length L1 in the front-rear direction of the covering material 3 is set to be long with respect to the total length (L3 + 2 x L4) of a length L3 in the front-rear direction of the lower surface 11, a length L4 in the up-down direction of the front surface 13, and the length L4 in the up-down direction of the rear surface 14. Also, the length L1 in the front-rear direction of the covering material 3 is set to be short with respect to the total length (2 x L3 + 2 x L4) of the length L3 in the front-rear direction of the upper surface 10, the length L3 in the front-rear direction of the lower surface 11, the length L4 in the up-down direction of the front surface 13, and the length L4 in the up-down direction of the rear surface 14.

As shown in FIG. 6A, a length L2 in the right-left direction of the covering material 3 is, for example, set to be long with respect to a length L5 in the right-left direction of the lower surface 11. The length L2 in the right-left direction of the covering material 3 is, for example, set to be the same as or longer than the total length (L5 + 2 x L3) of the length L5 in the right-left direction of the lower surface 11, the length L3 in the front-rear direction of the right surface 15, and the length L3 in the front-rear direction of the left surface 16.

The covering material 3 has a thickness of, for example, 5 µm or more, or preferably 10 µm or more, and, for example, 200 µm or less, or preferably 100 µm or less.

### 2. Method for Producing Covering Material-Provided Non-Aqueous Secondary Cell

Next, a method for producing the covering material-provided non-aqueous secondary cell 1 is described.

The method for producing the covering material-provided non-aqueous secondary cell 1 includes a cell preparing step (ref: FIG. 6A), a covering material preparing step (ref: FIG. 6A), and a covering step (ref: FIGS. 6B to 6E). In the following, each of the steps is described in detail.

### 2-1. Cell Preparing Step

As shown in FIG. 6A, in the cell preparing step, the non-aqueous secondary cell 2 including the cell main body 4 and the terminals 5 that are provided on the upper surface 10 of the cell main body 4 is prepared.

### 2-2. Covering Material Preparing Step

In the covering material preparing step, the covering material 3 including the substrate 8 and the pressure-sensitive adhesive layer 9 that is disposed on the surface of the substrate 8 is prepared as a rectangular sheet.

### 2-3. Covering Step

The covering step is performed after "2-1. Cell Preparing Step" and "2-2. Covering Material Preparing Step".

The covering step includes a first step (ref: FIGS. 6B to 6D) of covering the lower surface 11, the front surface 13, and the rear surface 14 of the cell main body 4 with the covering material 3 and a second step (ref: FIG. 6E) of overlapping the covering material 3 with each other at the outer sides of the right surface 15 and the left surface 16.

### 2-3-1. First Step

In the first step, the pressure-sensitive adhesive layer 9 pressure-sensitively adheres to the lower surface 11 (ref: FIGS. 3 and 4), and the front surface 13 and the rear surface 14 (ref: FIGS. 3 and 4) of the cell main body 4. Then, the lower surface 11, the front surface 13, and the rear surface 14 of the cell main body 4 are covered with the covering material 3. That is, the lower surface-covering portion 81, the front surface-covering portion 83, and the rear surface-covering portion 84 are formed in the covering material 3.

To perform the first step, first, as shown in FIGS. 3, 4, and 6B, the lower surface 11 of the non-aqueous secondary cell 2 is brought into contact with a central portion 51 of the pressure-sensitive adhesive layer 9. That is, the central portion 51 of the pressure-sensitive adhesive layer 9 pressure-sensitively adheres to the lower surface 11. To be specific, the lower surface of the non-aqueous secondary cell 2 is disposed (placed) on the central portion 51 of the pressure-sensitive adhesive layer 9. In this manner, the lower surface 11 is covered with the central portion 51 of the covering material 3. In this manner, the lower surface-covering portion 81 is formed in the covering material 3.

Next, as shown in FIGS. 3,4, and 6C, a front portion 52 that is positioned at the front side with respect to the central portion 51 and a rear portion 53 that is positioned at the rear side with respect to the central portion 51 in the covering material 3 are folded back upwardly, and the front portion 52 and the rear portion 53 of the pressure-sensitive adhesive layer 9 are brought into contact with the front surface 13 and the rear surface 14 of the non-aqueous secondary cell 2, respectively.

To be more specific, as shown by arrows in FIG. 6B, the front end portion of the front portion 52 is vibrated rearwardly with the central portion 51 as a supporting point. Along with this, the rear end portion of the rear portion 53 is vibrated forwardly with the central portion 51 as a supporting point.

In this manner, the front portion 52 (the front portion 52 excluding the front end portion thereof) and the rear portion 53 (the rear portion 53 excluding the rear end portion thereof) of the pressure-sensitive adhesive layer 9 pressure-sensitively adhere to the front surface 13 and the rear surface 14 (ref: FIGS. 3 and 4) of the non-aqueous secondary cell 2, respectively. In this manner, the front surface 13 and the rear surface 14 of the non-aqueous secondary cell 2 are covered with the front portion 52 (the front portion 52 excluding the front end portion thereof) and the rear portion 53 (the rear portion 53 excluding the rear end portion thereof) of the covering material 3, respectively. In this manner, the front surface-covering portion 83 and the rear surface-covering portion 84 are formed in the covering material 3.

Subsequently, as shown in FIGS. 3,4, and 6D, the front end portion of the front portion 52 and the rear end portion of the rear portion 53 of the covering material 3 are bundled up at the center. To be specific, as shown by the arrows in FIG. 6C, the front end portion of the front portion 52 of the covering material 3 is folded back rearwardly. Along with this, the rear end portion of the rear portion 53 of the covering material 3 is folded back forwardly.

In this manner, the front end portion of the front portion 52 of the pressure-sensitive adhesive layer 9 pressure-sensitively adheres to the front end portion 31 of the upper surface 10. To be specific, as shown in FIGS. 3 and 4, the front end portion (to be more specific, a front end base portion 61 in the front end portion) of the front portion 52 of the pressure-sensitive adhesive layer 9 pressure-sensitively adheres to the front portion 35 of the upper surface 10. The rear end portion of the rear portion 53 of the pressure-sensitive adhesive layer 9 pressure-sensitively adheres to the rear end portion 32 of the upper surface 10. To be specific, the rear end portion (to be more specific, a rear end base portion 62 in the rear end portion) of the rear portion 53 of the pressure-sensitive adhesive layer 9 pressure-sensitively adheres to the rear portion 36 of the upper surface 10.

In this manner, the pressure-sensitive adhesive layer 9 pressure-sensitively adheres to the entire front end edge 31 in the right-left direction. Also, the pressure-sensitive adhesive layer 9 pressure-sensitively adheres to the entire rear end edge 32 in the right-left direction.

In short, the pressure-sensitive adhesive layer 9 pressure-sensitively adheres to the entire front portion 52 and the entire rear portion 53 (excluding portions in which the terminals 5 are provided) of the upper surface 10.

In this manner, the upper surface-covering portion 80 is formed in the covering material 3.

Subsequently, as shown in FIG 3, the most front portion 63 (in the developed state, the front free end portion that is positioned at the front side with respect to the above-described front end base portion 61, that is, the excess front portion 52 after forming the upper surface-covering portion 80, that is, the front end edge 63) in the front end portion of the front portion 52 and the most rear portion 64 (in the developed state, the rear free end portion that is positioned at the rear side with respect to the above-described rear end base portion 62, that is, the excess rear portion 53 after forming the upper surface-covering portion 80, that is, the rear end edge 64) in the rear end portion of the rear portion 53 are overlapped with each other by the pressure-sensitive adhesive layer 9. In this manner, the most front portion 63 and the most rear portion 64 of the pressure-sensitive adhesive layer 9 pressure-sensitively adhere to each other, and the first overlapped portion 45 in which the most front portion 63 and the most rear portion 64 of the covering material 3 are overlapped with each other is formed in the covering material 3.

Meanwhile, as shown in FIG. 4, in the formation of the above-described first overlapped portion 45, in the portion corresponding to each of the terminals 5, the most front portion 63 of the front portion 52 and the most rear portion 64 of the rear portion 53 of the pressure-sensitive adhesive layer 9 pressure-sensitively adhere to the front surface and the rear surface of each of the terminals 5, respectively. At this time, the lower portion of the terminal 5 is covered with the covering material 3 so as to expose the upper portion of the terminal 5. In this manner, the terminal covering portion 87 is formed in the covering material 3.

As shown in FIG. 6D, in the first step, a right portion 54 (portion that is positioned at the right side with respect to the central portion 51) and a left portion 55 (portion that is positioned at the left side with respect to the central portion 51) in the covering material 3 are not yet contact with the right surface 15 and the left surface 16 of the non-aqueous secondary cell 2, respectively, and the covering material 3 has a generally ring shape in sectional view that is long in the up-down direction based on the formation of the above-described first overlapped portion 45.

### 2-3-2. Second Step

The second step is performed after "2-3-1. First Step".

As shown in FIGS. 5 and 6E, in the second step, the pressure-sensitive adhesive layer 9 pressure-sensitively adheres to each other at the outer sides of the right surface 15 and the left surface 16 of the cell main body 4. In this manner, the second overlapped portions 60 are formed in the covering material 3.

To perform the second step, each of the right portion 54 and the left portion 55 of the covering material 3 is folded back toward the center in the front-rear direction of the right surface 15 and the left surface 16.

To be specific, the right end portion (to be more specific, right end base portions 58 in the right portion 54) in the right portion 54 of the pressure-sensitive adhesive layer 9 pressure-sensitively adheres to the right surface 15. In this manner, the right surface-covering portion 85 is formed in the covering material 3.

The left end portion (to be more specific, left end base portions 59 in the left portion 55) in the left portion 55 of the pressure-sensitive adhesive layer 9 pressure-sensitively adheres to the left surface 16. In this manner, the left surface-covering portion 86 is formed in the covering material 3.

Subsequently, at the right side of the right surface 15, the most right portions 56 (the right free end portions that are positioned at the right side with respect to the above-described right end base portions 58, that is, the excess right portion 54 after forming the right surface-covering portion 85, that is, the right end edges 56) of the right portion 54 are overlapped with each other by the pressure-sensitive adhesive layer 9. Also, at the left side of the left surface 16, the most left portions 57 (the left free end portions that are positioned at the left side with respect to the above-described left end base portions 59, that is, the excess left portion 55 after forming the left surface-covering portion 86, that is, the most left portions 57) of the left portion 55 are overlapped with each other by the pressure-sensitive adhesive layer 9.

In this manner, the most right portions 56 of the pressure-sensitive adhesive layer 9 pressure-sensitively adhere to each other and the most left portions 57 thereof pressure-sensitively adhere to each other, so that the second overlapped portions 60 in which the most right portions 56 of the covering material 3 are overlapped with each other and the most left portions 57 thereof are overlapped with each other are formed in the covering material 3.

In this manner, the cell main body 4 is covered with the covering material 3 so as to expose the terminals 5. By the above-described steps, the covering material-provided non-aqueous secondary cell 1 including the non-aqueous secondary cell 2 and the covering material 3 is obtained.

3. Cell Stack

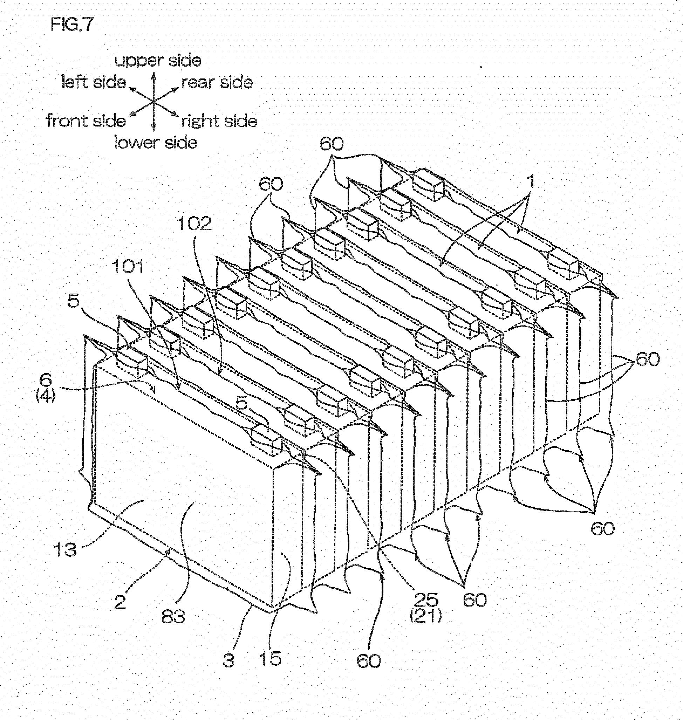

As shown in FIG. 7, a cell stack 70 includes a plurality of covering material-provided non-aqueous secondary cells 1 described above.

In the cell stack 70, the plurality of covering material-provided non-aqueous secondary cells 1 are stacked in the front-rear direction so that each of the front surfaces 13 and each of the rear surfaces 14 (not shown in FIG. 7, ref: FIG. 4) are adjacent to each other. For example, a first covering material-provided non-aqueous secondary cell 101 and a second covering material-provided non-aqueous secondary cell 102 that is disposed in opposed relation at the rear side of the first covering material-provided non-aqueous secondary cell 101 are stacked so that the rear surface 14 (not shown in FIG. 7, ref: FIG. 4) of the first covering material-provided non-aqueous secondary cell 101 is adjacent to the front surface 13 (not shown in FIG. 7, ref: FIG. 4) of the second covering material-provided non-aqueous secondary cell 102 in the front-rear direction without any space. To be specific, in the cell stack 70, the entire surface of the rear surface-covering portion 84 of the first covering material-provided non-aqueous secondary cell 101 is in contact with the entire surface of the front surface-covering portion 83 of the second covering material-provided non-aqueous secondary cell 102 without any space.

In the cell stack 70, the terminals 5 corresponding to the plurality of covering material-provided non-aqueous secondary cells 1 have shapes protruding upwardly from the upper surfaces 10.

The plurality of second overlapped portions 60 corresponding to the plurality of covering material-provided non-aqueous secondary cells 1 are not positioned at the inner side of a projected surface obtained by projecting the cell stack 70 in the front-rear direction, but at the outer sides (right and left sides) in the right-left direction of the projected surface. The plurality of first overlapped portions 45 corresponding to the plurality of covering material-provided non-aqueous secondary cells 1 are not positioned at the inner side of the above-described projected surface, but at the upper side of the projected surface.

### <Function and Effect>

According to the covering material-provided non-aqueous secondary cell 1, the substrate 8 covers the upper surface 10 by pressure-sensitively adhering to the front end edge 31 and the rear end edge 32 of the circumferential end edges 30 of the upper surface 10, so that infiltration of water from the front end edge 31 and the rear end edge 32 of the circumferential end edges 30 of the upper surface 10 into the inside of the cell main body 4 can be suppressed. To be specific, infiltration of water from the front end edge 31 and the rear end edge 32 into a gap between the upper lid 18 and the exterior portion 7 can be suppressed. Thus, deterioration of the non-aqueous secondary cell 2 can be suppressed. As a result, the covering material-provided non-aqueous secondary cell 1 has excellent reliability.

In the covering material-provided non-aqueous secondary cell 1, the substrate 8 pressure-sensitively adheres to and covers the entire circumference end edges 30 of the upper surface 10, that is, in addition to the front end edge 31 and the rear end edge 32, the right end edge 33 and the left end edge 34, so that the above-described infiltration of water is effectively suppressed and deterioration of the non-aqueous secondary cell 2 can be effectively suppressed.

In the covering material-provided non-aqueous secondary cell 1, the second overlapped portions 60 are provided not at the outer sides of the first surfaces 40, but at the outer sides of the second surfaces 41, so that bulkiness thereof in the front-rear direction can be suppressed. Thus, when the cell stack 70 is produced by stacking the plurality of covering material-provided non-aqueous secondary cells 1 so that the first surfaces 40 are adjacent to each other, the compact cell stack 70 can be produced.

According to the covering material-provided non-aqueous secondary cell 1, as shown in FIG 6A, the covering material 3 has a rectangular shape in the developed state, so that the covering material 3 in a simple shape can cover the non-aqueous secondary cell 2 without performing trimming such as a cut or a cutout to the covering material 3.

According to the covering material-provided non-aqueous secondary cell 1, the pressure-sensitive adhesive layer 9 is disposed on the entire surface of the substrate 8, so that the pressure-sensitive adhesive layer 9 is easily formed without being formed in a pattern and thus, an easy structure of the covering material 3 can be achieved. Also, the non-aqueous secondary cell 2 can be covered without any space.

According to the method for producing the covering material-provided non-aqueous secondary cell 1, in the covering step, the pressure-sensitive adhesive layer 9 pressure-sensitively adheres to the front end edge 31 and the rear end edge 32 of the circumferential end edges 30 of the upper surface 10, so that the covering material 3 covers the front end edge 31 and the rear end edge 32 of the circumferential end edges 30 of the upper surface 10 and thus, infiltration of water from the front end edge 31 and the rear end edge 32 of the circumferential end edges 30 of the upper surface 10 into the inside of the cell main body 4 can be suppressed. To be specific, infiltration of water from the front end edge 31 and the rear end edge 32 into a gap between the upper lid 18 and the exterior portion 7 can be suppressed. Thus, deterioration of the non-aqueous secondary cell 2 can be suppressed. As a result, the covering material-provided non-aqueous secondary cell 1 having excellent reliability can be produced.

According to the method for producing the covering material-provided non-aqueous secondary cell 1, as shown in FIG 6C, in the first step, the covering material 3 covers the lower surface 11 (ref: FIGS. 3 and 4), and the front surface 13 and the rear surface 14 (ref: FIGS. 3 and 4) and as shown in FIG. 6E, in the second step, the second overlapped portions 60 in which the covering material 3 is overlapped with each other are formed at the right side of the right surface 15 and the left side of the left surface 16, so that the second overlapped portions 60 can be surely disposed not at the front side of the front surface 13 and the rear side of the rear surface 14, but at the right side of the right surface 15 and the left side of the left surface 16.

Thus, in the cell stack 70, the front surface-covering portion 83 and the rear surface-covering portion 84 of the covering material-provided non-aqueous secondary cell 1 that are adjacent to each other can be brought into tight contact with each other. As a result, bulkiness of the cell stack 70 in the front-rear direction can be suppressed and miniaturization thereof can be achieved.

### <Modified Example>

In modified examples, the same reference numerals are provided for the members and steps corresponding to each of those described in the above-described one embodiment, and their detailed description is omitted.

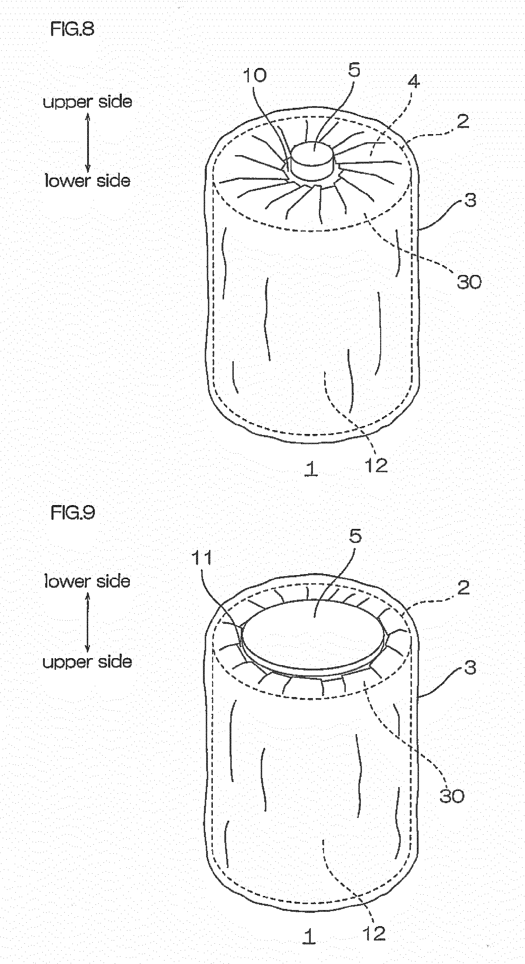

In the above-described one embodiment, the non-aqueous secondary cell 2 is described as a prismatic non-aqueous secondary cell. However, the non-aqueous secondary cell 2 is not limited to the above-described description. Alternatively, for example, as shown in FIGS. 8 and 9, the non-aqueous secondary cell 2 may be a cylindrical non-aqueous secondary cell having a generally columnar shape extending in the up-down direction.

As shown in FIGS. 8 and 9, in the non-aqueous secondary cell 2, the terminals 5 are provided on each of the upper surface 10 and the lower surface 11 of the cell main body 4. The circumferential side surfaces 12 are formed as the circumferential outer side surfaces.

In the covering material-provided non-aqueous secondary cell 1 including the non-aqueous secondary cell 2, the pressure-sensitive adhesive layer 9 pressure-sensitively adheres to both of the circumferential end edge 30 of the upper surface 10 and the circumferential end edge 30 of the lower surface 11, so that the covering material 3 covers the circumferential end edges 30 of the upper surface 10 and the lower surface 11.

According to the covering material-provided non-aqueous secondary cell 1 shown in FIGS. 8 and 9, infiltration of water from the circumferential end edges 30 of both surfaces of the upper surface 10 and the lower surface 11 into the inside of the cell main body 4 can be suppressed.

In the above-described one embodiment, the pressure-sensitive adhesive layer 9 pressure-sensitively adheres to the entire upper surface 10 (100%) (excluding the portions in which the terminals 5 are formed). However, the covering range is not limited to this. The pressure-sensitive adhesive layer 9 (the covering material 3) may cover at least a part of the circumferential end edges 30 of the upper surface 10, that is, at least the front end edge 31 and the rear end edge 32, to be specific, may cover, for example, 60% or more, preferably 75% or more, or more preferably 90% or more, and 99% or less of the upper surface 10.

Furthermore, the pressure-sensitive adhesive layer 9 pressure-sensitively adheres to the entire front end edge 31 and the entire rear end edge 32. Alternatively, for example, though not shown, the pressure-sensitive adhesive layer 9 may also pressure-sensitively adhere to only the central portion in the right-left direction of the front end edge 31 (portion excluding both end portions in the right-left direction of the front end edge 31) and/or the central portion in the right-left direction of the rear end edge 32 (portion excluding both end portions in the right-left direction of the rear end edge 32) and may be disposed at spaced intervals to both end portions in the right-left direction of the front end edge 31 and/or both end portions in the right-left direction of the rear end edge 32. That is, both end portions in the right-left direction of the front end edge 31 and/or both end portions in the right-left direction of the rear end edge 32 can be also exposed.

In the above-described one embodiment, as shown in FIG 6A, the covering material 3 has a rectangular shape in the developed state. Alternatively, for example, though not shown, the covering material 3 can also have a cut or a cutout corresponding to the shape of the non-aqueous secondary cell 2.

In the above-described one embodiment, as shown in FIG. 5, the second overlapped portions 60 are formed in the covering material 3 at the outer sides of the right surface 15 and the left surface 16 by pressure-sensitive adhesion of the pressure-sensitive adhesive layer 9 to each other. However, as long as the second overlapped portions 60 are formed, its process is not limited to the pressure-sensitive adhesion of the pressure-sensitive adhesive layer 9 to each other.

As shown in FIG. 10A, for example, first, the pressure-sensitive adhesive layer 9 is disposed at only the central portion in a widthwise direction of the substrate 8 so as to expose the most right portions 56 and the most left portions 57 of the substrate 8. The substrate 8 is formed of a material that is capable of thermally compression bonding (to be specific, a thermoplastic resin or the like including polypropylene, polyethylene, propylene-ethylene copolymer, polyester, polyurethane, ethylene-vinyl alcohol copolymer, ethylene-vinyl acetate copolymer, or the like).

To perform the second step by using the covering material 3 having the pressure-sensitive adhesive layer 9, as shown in FIG. 10B, the most right portions 56 (the right end edges 56) of the substrate 8 are overlapped with each other to be thermally compression bonded to each other at the right side of the right surface 15. Also, the most left portions 57 of the substrate 8 are overlapped with each other to be thermally compression bonded to each other at the left side of the left surface 16.

In this manner, the most right portions 56 of the substrate 8 are thermally compression bonded to each other and the most left portions 57 thereof are thermally compression bonded to each other, so that the second overlapped portions 60 in which the most right portions 56 of the covering material 3 are overlapped with each other and the most left portions 57 thereof are overlapped with each other are formed in the covering material 3.

That is, by thermally compression bonding the substrate 8 in which the pressure-sensitive adhesive layer 9 is not formed to each other, the second overlapped portions 60 are formed by only the covering material 3.

As shown in FIG. 11B, by pressure-sensitive adhesion of the substrate 8 in which the pressure-sensitive adhesive layer 9 is not formed to the pressure-sensitive adhesive layer 9, the second overlapped portions 60 can be also formed.

As shown in FIG. 11A, the pressure-sensitive adhesive layer 9 is disposed at the front side with respect to a line segment L passing the central portion 51 in the substrate 8 along the right-left direction so as to expose the substrate 8 at the rear-side portion with respect to the line segment L.

To perform the first step by using the covering material 3 shown in FIG 11A, the front-side portion of the lower surface 11 of the non-aqueous secondary cell 2 is brought into contact with the central portion 51 of the pressure-sensitive adhesive layer 9. As shown in FIGS. 11C and 11D, the rear portion 53 that is positioned at the rear side with respect to the central portion 51 is folded back upwardly to be brought into contact with the pressure-sensitive adhesive layer 9 of the front portion 52.

As shown in FIG. 11B, in the second step, the pressure-sensitive adhesive layer 9 that is positioned at the front-side portions of the most right portions 56 pressure-sensitively adheres to the covering material 3 that is positioned at the rear-side portions of the most right portions 56 at the right side of the right surface 15. Also, the pressure-sensitive adhesive layer 9 that is positioned at the front-side portions of the most left portions 57 pressure-sensitively adheres to the covering material 3 that is positioned at the rear-side portions of the most left portions 57. In this manner, the second overlapped portions 60 that consist of the pressure-sensitive adhesive layer 9 at the front-side portion and the substrate 8 at the rear-side portion and in which the most right portions 56 of the covering material 3 are overlapped with each other and the most left portions 57 thereof are overlapped with each other are formed.

As shown in FIG. 6A, in the above-described one embodiment, the pressure-sensitive adhesive layer 9 is disposed on the entire surface of the substrate 8. However, the arrangement is not limited to the above-described description. Alternatively, as shown in FIGS. 10A, 11B. and 12, the pressure-sensitive adhesive layer 9 can be also disposed in a part of the surface of the substrate 8.

As shown in FIG. 12, the pressure-sensitive adhesive layers 9 have a striped state on the surface of the substrate 8. In FIG. 12, the pressure-sensitive adhesive layers 9 have belt shapes extending in the front-rear direction and a plurality (for example, three pieces) thereof are disposed at spaced intervals to each other in the right-left direction.

As shown in FIG. 5, in the above-described one embodiment, the second overlapped portions 60 are formed. Alternatively, for example, though not shown, in the second step (ref: FIG. 6E), the pressure-sensitive adhesive layer 9 can also pressure-sensitively adhere to each of the right surface 15 and the left surface 16 without forming the second overlapped portion 60.

As shown in FIG. 5, in the above-described one embodiment, the right end base portions 58 of the pressure-sensitive adhesive layer 9 pressure-sensitively adhere to the right surface 15 of the cell main body 4, thereby forming the right surface-covering portion 85 in the covering material 3. Along with this, the left end base portions 59 of the pressure-sensitive adhesive layer 9 pressure-sensitively adhere to the left surface 16 of the cell main body 4, thereby forming the left surface-covering portion 86 in the covering material 3. However, the formation is not limited to this. Alternatively, for example, as shown in FIG. 13, the second overlapped portions 60 only can be also formed in the covering material 3 at the outer sides of the right surface 15 and the left surface 16 without forming the right surface-covering portion 85 and the left surface-covering portion 86.

In FIG. 13, the two right end base portions 58 are disposed in opposed relation at spaced intervals to each other at the right side of the right surface 15. The right surface 15 is exposed.

The two left end base portions 59 are disposed in opposed relation at spaced intervals to each other. The left surface 16 is exposed.

In FIG. 13, the pressure-sensitive adhesive layer 9 is disposed on the entire surface of the substrate 8. Alternatively, as shown in FIG. 14, the pressure-sensitive adhesive layer 9 is disposed so as to expose the most right portions 56 and the most left portions 57 of the substrate 8. In the second step, the most right portions 56 of the substrate 8 are thermally compression bonded to each other and the most left portions 57 thereof are thermally compression bonded to each other, thereby forming the second overlapped portions 60.

In the above-described one embodiment, the covering material 3 and the upper surface 10 have rectangular shapes. Alternatively, for example, the covering material 3 and the upper surface 10 may also have generally rectangular shapes. That is, the generally rectangular shapes fail to have clear four vertexes and can include curved shapes that are formed in positions corresponding to the four vertexes.

As shown in FIG. 6D, in the above-described one embodiment, the covering material 3 covers the upper surface 10. Thereafter, as shown in FIG. 6E, the covering material 3 covers the right surface 15 and the left surface 16. However, the order of these is not limited. That is, though not shown, as referred to FIG. 6E, the covering material 3 covers the right surface 15 and the left surface 16 and thereafter, can also cover the upper surface 10.

Furthermore, in the above-described one embodiment, the covering material 3 covers the lower surface 11; next, covers the front surface 13 and the rear surface 14; and thereafter, covers the upper surface 10. However, the order of these is not limited. That is, for example, though not shown, first, the covering material 3 covers the front portion 35 of the upper surface 10 and subsequently, can also sequentially cover the front surface 13, the lower surface 11, the rear surface 14, and the rear portion 36 of the upper surface 10. Or, oppositely, that is, first, the covering material 3 covers the rear portion 36 of the upper surface 10 and subsequently, can also sequentially cover the rear surface 14, the lower surface 11, the front surface 13, and the front portion 35 of the upper surface 10.

## Claims

1. A covering material-provided non-aqueous secondary cell comprising:
a non-aqueous secondary cell including a cell main body having one surface, the other surface disposed in opposed relation at spaced intervals to the one surface, and circumferential side surfaces connecting a circumferential end edge of the one surface to a circumferential end edge of the other surface and a terminal provided on at least any one of the one surface and the other surface and
a covering material covering the cell main body so as to expose the terminal, wherein
the covering material includes a substrate and a pressure-sensitive adhesive layer disposed on one surface of the substrate and
by allowing the pressure-sensitive adhesive layer to pressure-sensitively adhere to at least a part of the circumferential end edge of at least any one of the one surface and the other surface of the cell main body, the covering material covers at least a part of the circumferential end edge of at least any one of the one surface and the other surface of the cell main body.

2. The covering material-provided non-aqueous secondary cell according to claim 1, wherein
the covering material covers 60% or more of at least any one of the one surface and the other surface.

3. The covering material-provided non-aqueous secondary cell according to claim 1, wherein
the terminal is provided on the one surface of the cell main body;
each of the one surface and the other surface of the cell main body has a generally rectangular shape having two long sides facing each other and two short sides facing each other between the two long sides;
the circumferential side surfaces have
two first surfaces continuous to the two long sides and disposed in opposed relation at spaced intervals to each other and
two second surfaces continuous to the two short sides and disposed in opposed relation at spaced intervals to each other; and
by allowing the pressure-sensitive adhesive layer to pressure-sensitively adhere to the other surface and the two first surfaces of the cell main body,
the covering material covers the other surface and the two first surfaces of the cell main body and has overlapped portions having the covering material overlapped with each other at the outer sides of the two second surfaces of the cell main body.

4. The covering material-provided non-aqueous secondary cell according to claim 1, wherein
the covering material has a generally rectangular shape in a developed state.

5. The covering material-provided non-aqueous secondary cell according to claim 1, wherein
the pressure-sensitive adhesive layer is disposed on the entire one surface of the substrate.

6. A method for producing a covering material-provided non-aqueous secondary cell comprising:
a cell preparing step of preparing a non-aqueous secondary cell including a cell main body having one surface, the other surface disposed in opposed relation at spaced intervals to the one surface, and circumferential side surfaces connecting a circumferential end edge of the one surface to a circumferential end edge of the other surface and a terminal provided on at least any one of the one surface and the other surface;
a covering material preparing step of preparing a covering material including a substrate and a pressure-sensitive adhesive layer disposed on one surface of the substrate; and
a covering step of covering the cell main body with the covering material so as to expose the terminal, wherein
in the covering step, by allowing the pressure-sensitive adhesive layer to pressure-sensitively adhere to at least a part of the circumferential end edge of at least any one of the one surface and the other surface of the cell main body, the covering material covers at least a part of the circumferential end edge of at least any one of the one surface and the other surface of the cell main body.

7. The method for producing a covering material-provided non-aqueous secondary cell according to claim 6, wherein
the terminal is provided on the one surface of the cell main body;
each of the one surface and the other surface of the cell main body has a generally rectangular shape having two long sides facing each other and two short sides facing each other between the two long sides;
the circumferential side surfaces have
two first surfaces continuous to the two long sides and disposed in opposed relation at spaced intervals to each other and
two second surfaces continuous to the two short sides and disposed in opposed relation at spaced intervals to each other; and
the covering step includes
a first step of covering the other surface and the two first surfaces of the cell main body with the covering material by allowing the pressure-sensitive adhesive layer to pressure-sensitively adhere to the other surface and the two first surfaces of the cell main body and
a second step of forming overlapped portions having the covering material overlapped with each other at the outer sides of the two second surfaces of the cell main body.

8. A cell stack comprising:
a plurality of covering material-provided non-aqueous secondary cells according to claim 3, wherein
the plurality of covering material-provided non-aqueous secondary cells are stacked so that the first surfaces are adjacent to each other.
